# EUROPÄISCHE PATENTANMELDUNG

(11) **EP 3 712 092 A1**
(43) Veröffentlichungstag der Anmeldung: **23.09.2020**
(21) Anmeldenummer: 19163785.9
(22) Anmeldetag: 19.03.2019
(51) Int. Cl.: B65G 47/44, B65G 47/51, B65G 67/08

(54) **ERHÖHUNG DER SPEICHERKAPAZITÄT VON SYSTEMEN ZUR SENDUNGSPUFFERUNG**

(71) Anmelder: Siemens Aktiengesellschaft, 80333 München (DE)
(72) Erfinder: BECHER, Jörn, 55127 Mainz (DE)
(74) Vertreter: Maier, Daniel Oliver

(57) **Zusammenfassung**

Verfahren und Vorrichtung zur bedarfsgerechten Erhöhung der Speicherkapazität von Systemen (1) zur Sendungspufferung bei Kommissionierungsvorgängen von Sendungen (2) umfassend die folgenden Schritte:
• Übergabe von Sendungen (2) in einem Übergangsbereich (4) an einen ersten Sendungspufferbereich (3);
• Übergabe der Sendungen (2) von dem ersten Sendungspufferbereich (3) an einen zweiten Sendungspufferbereich (7) mit einem ersten Fassungsvermögen (8);
• Vergrößern des ersten Fassungsvermögens (8) des zweiten Sendungspufferbereichs (7) in Abhängigkeit eines ersten Auslösesignals von einer ersten Signalvorrichtung (13) in dem ersten Sendungspufferbereich (3);
• Stoppen des Vergrößerns des ersten Fassungsvermögens(8) des zweiten Sendungspufferbereichs (7) entweder in Abhängigkeit eines zweiten Auslösesignals von der ersten Signalvorrichtung (13) in dem ersten Sendungspufferbereich (3) oder in Abhängigkeit von einem dritten Auslösesignal von einer zweiten Signalvorrichtung (14) in dem zweiten Sendungspufferbereich (7).

## Beschreibung

Die Erfindung betrifft ein Verfahren zur bedarfsgerechten Erhöhung der Speicherkapazität von Systemen zur Sendungspufferung bei Kommissionierungsvorgängen von Sendungen sowie ein System zur Sendungspufferung bei Kommissionierungsvorgängen von Sendungen.

Sendungen, wie beispielsweise Pakete, Päckchen, größere Papp- oder Papierumschläge oder ähnliche Formate, werden im Allgemeinen vor der eigentlichen Auslieferung an den unterschiedlichsten Punkten kommissioniert. Eine Zusammenstellung von Sendungen kann dabei beispielsweise vor oder während eines Beladevorgangs von einem Ladungsträger erfolgen. Ladungsträger können zum Beispiel Lastkraftwagen, Wechselbrücken, Trailer oder Container sein. Dabei werden häufig verschiedene Systeme während der Kommissionierung gekoppelt, um die Sendungen beispielsweise zu sortieren oder allgemein zu den Beladungspunkten zu befördern. In der Paketverteilung werden Sendungen wie oben beschrieben beispielsweise oft von einer automatischen Sortieranlage ausgehend über sogenannte Wendelrutschen auf Beladeteleskope geschleust. Die Beladeteleskope werden dabei vor den jeweiligen Ladungsträgern positioniert und können in diese "teleskopiert" werden. Sprich die Ladungskapazität lässt sich bei solchen Beladeteleskopen vergrößern, indem diese verlängerbare Flächen aufweisen, auf welchen die einzelnen Sendungen teil- oder vollautomatisiert befördert werden. Dabei dienen die Flächen dieser Beladungsteleskope während der Benutzung als Sendungspufferbereiche, sodass die gespeicherten Sendungen anschließend von dort in die Ladungsträger bewegt werden können. Dies kann beispielsweise manuell vollzogen werden, indem die Sendungen von dem Beladungsteleskop entnommen und anschließend in den Ladungsträger gestapelt werden. Das System aus Wendelrutsche und Teleskop kann auch als Endstelle bezeichnet werden. Auch diese unterteilten Endstellen werden häufig zusammengenommen als Sendungsspeicher genutzt. Ein verbreitetes Problem besteht dabei darin, dass das Speichervolumen dieser Endstellen sehr limitiert ist und diese Endstellen im Betrieb oft voll sind. In der Folge können keine weiteren Sendungen mehr in diese Endstellen ausgeschleust werden, was zur Folge hat, dass die Sendungen für diese Endstelle auf dem vorgelagerten Sortierer beziehungsweise Sorter rezirkuliert. Somit wird wertvolle Sortierkapazität besetzt. Andere zu verteilende Sendungen können demnach nicht in den Sortierer eingespeist werden. Auch können durch diesen Rückstau die rezirkulierenden Sendungen durch einen längeren Verbleib auf den Sortern oft Störungen auslösen, die dann zu einem Sorterstopp führen können. Diese unerwünschten Vorgänge führen also zu Durchsatzverlusten und damit zusammenhängende Produktivitätseinbußen. Falls diese Sendungen nach einigen Runden mit weiteren Ausschleussversuchen in einen vorgesehenen Überlauf gelangen, können dort zusätzliche Kosten verursacht werden. Diese zusätzlichen Kosten können beispielsweise aufgrund von zusätzlichem Personal anfallen. Die Speicherung von Sendungen in einem System mit zwei Sendungspufferbereichen, beispielsweise dargestellt durch eine Wendelrutsche und ein Teleskop, funktioniert heute wie folgt. Die Sendungen rutschen durch die Wendelrutsche bis auf das Teleskop. Am Übergang Wendelrutsche/Teleskop ist eine Lichtschranke, die bei Verdunkelung das Beladeteleskop so lange in Gang setzt, bis die Lichtschranke nicht mehr verdeckt ist. Am Ende des Teleskops ist eine weitere Lichtschranke. Wenn die auf dem Teleskop liegenden Sendungen so weit vorgefahren sind, dass die vorderste Sendung in diese Lichtschranke ragt, ist das Teleskop voll und der automatische Speichermechanismus wird eingestellt. Anschließend können noch Sendungen in der Wendelrutsche gespeichert werden. Auf halber Höhe der Wendelrutsche ist eine Lichtschranke eingebaut, die bei längerer Verdunkelung indiziert, dass die Endstelle halb voll ist. Weiter oben ist eine weitere Lichtschranke, die bei Verdunkelung die Vollmeldung auslöst. In diesem Fall passt keine weitere Sendung mehr in die Endstelle und der Sorter schleust keine Sendungen mehr in diese Endstelle aus. Dabei wird heute das Vorfahren des Teleskops durch die Lichtschranke am Übergang der Wendelrutsche auf das Teleskop gesteuert. Das Teleskop fährt dann immer so weit vor, dass die Lichtschranke wieder frei ist. Aufgrund dieser Vorgehensweise ist erfahrungsgemäß die Sendungsdichte auf dem Teleskop nicht besonders hoch. Vielmehr sind zwischen den meisten Sendungen erhebliche Lücken. Zudem liegen die Sendungen dadurch meist hintereinander, was auch als "Perlenkette" bezeichnet wird, da die einzelnen Sendungen seriell hintereinander aufgereiht sind (ähnlich den Perlen auf einer entsprechenden Kette). Die Funktionsweise von dem nachgelagerten Teleskop ist also entkoppelt von dem Zustand der vorgelagerten Wendelrutsche.

Die Aufgabe besteht darin, ein Verfahren und ein System bereitzustellen, welche die zuvor genannten Nachteile überkommt und eine kostengünstige Erhöhung der Speicherkapazität gewährleistet.

Das erfindungsgemäße Verfahren zur bedarfsgerechten Erhöhung der Speicherkapazität von Systemen zur Sendungspufferung bei Kommissionierungsvorgängen von Sendungen umfasst grundsätzlich folgende Schritte: In einem ersten Schritt findet eine Übergabe von Sendungen in einem Übergangsbereich an einen ersten Sendungspufferbereich statt. Anschließend wird eine Übergabe der Sendungen von dem ersten Sendungspufferbereich an einen zweiten Sendungspufferbereich mit einem ersten Fassungsvermögen vollzogen. Dabei wird das erste Fassungsvermögen des zweiten Sendungspufferbereichs in Abhängigkeit eines ersten Auslösesignals von einer ersten Signalvorrichtung in dem ersten Sendungspufferbereich vergrößert. Das Vergrößern des ersten Fassungsvermögens des zweiten Sendungspufferbereichs wird entweder in Abhängigkeit eines zweiten Auslösesignals von der ersten Signalvorrichtung in dem ersten Sendungspufferbereich gestoppt oder in Abhängigkeit von einem dritten Auslösesignal von einer zweiten Signalvorrichtung in dem zweiten Sendungspufferbereich gestoppt. Das Verfahren hat den Vorteil, dass eine bedarfsgerechte Erhöhung der Speicherkapazität eines Systems zur Sendungspufferung in Abhängigkeit von einer Gesamtsituation von verschiedenen Sendungspufferbereichen vollzogen wird, sodass die zuvor genannten Nachteile überkommen werden können. Mittels des vorgestellten Verfahrens ist es möglich, dass zunächst Sendungen in dem nachgelagerten zweiten Sendungspufferbereich gestaut werden können, wobei dadurch ein vorhandener Speicherbereich automatisch besser ausgenutzt wird. Wenn dieser nachgelagerte Speicherbereich optimal belegt ist, stauen sich folgende Sendungen weiter in dem ersten Sendungspufferbereich, wobei erst ein Auslösesignal der in diesem Bereich vorgehaltenen ersten Signalvorrichtung letztlich eine Vergrößerung des Fassungsvermögens des zweiten Sendungspufferbereichs bedingt. In diesem Zusammenhang können also die beiden Teilbereiche, da ein jeweiliger Zustand berücksichtigt wird, optimal hinsichtlich ihres Speichervermögens genutzt werden, sodass auf kostengünstige Weise eine Erhöhung der Speicherkapazität erreicht werden kann. Mittels des Verfahrens und der Anwendung in dafür vorgesehenen Systemen können diese Systeme also eine höhere Speicherkapazität aufweisen und somit können für einen längeren Zeitraum weitere Sendungen aufgenommen werden, ohne dass beispielsweise eine Vollmeldung registriert oder gemeldet wird. Benutzer können mittels des vorgestellten Verfahrens erreichen, dass mögliche Beladekräfte weniger oft solche Systeme leeren müssen, wobei in einem Vorgang außerdem mehr Sendungen abgetragen werden können. Dadurch lässt sich die Produktivität erhöhen, da das Verhältnis Abtragezeit zu Wegezeit steigt. Dadurch, dass diese Systeme bei Anwendung des vorgestellten Verfahrens also seltener voll sind, werden beispielsweise weniger Rezirkulationen von Sendungen auf einem möglicherweise vorgelagertem Sorter bedingt.

Eine wegen einer vermeintlichen Vollmeldung, also einer Vollmeldung, welche ausgelöst wurde, bevor eine tatsächlich optimale Speicherkapazität voll ausgeschöpft wurde, nicht abgeworfene Sendung muss dann beispielsweise auf dem Sorter weiter zirkulieren. Eine Rezirkulation schmälert die Sorterleistung beziehungsweise den Durchsatz. Dabei entspricht eine rezirkulierende Sendung in der Regel einer nicht verteilten Sendung. Nach x Rezirkulationen mit erneuten Abwurfversuchen an dem System, sprich dem ersten Sendungspufferbereich, gehen die Sendungen beispielsweise in eine Überlauf-Endstelle und müssen dort später manuell nochmals aufgelegt und verteilt werden. Diese Überlaufsendungen kosten erheblichen personellen Aufwand. Dabei kann es vorkommen, dass rezirkulierende Sendungen eine Sorterzerstörung auslösen. Eine Sorterzerstörung kostet oft zwischen 1.000 bis 1.500 Sendungen Durchsatz, was mit einem entsprechenden Umsatzausfall im Zusammenhang zu sehen ist. In dieser Zeit ist das Personal, dessen Stärke gleich bleibt, drastisch weniger produktiv. Dadurch, dass die Vergrößerung des zweiten Sendungsspeicherbereichs erst später einsetzt, werden die Sendungen kompakter gespeichert und nutzen einen dafür vorgesehenen Raum besser aus. Bewegungsimpulse von nachrückenden Sendungen sowie eine Gesamtdynamik von sich in Bewegung befindlichen Sendungen unterschiedlichster Größe und Gewicht unterstützen diese Vorteile des vorgestellten Verfahrens, ohne dass zusätzliche manuelle oder andere Hilfe benötigt wird.

Erfindungsgemäß wird zudem ein System zur Sendungspufferung bei Kommissionierungsvorgängen von Sendungen zur Verfügung gestellt, welches die folgenden Merkmale umfasst: Einen ersten Sendungspufferbereich, welcher ausgelegt ist Sendungen in einem Übergangsbereich entgegen zu nehmen. Einen zweiten Sendungspufferbereich mit einem ersten Fassungsvermögen, welcher mit dem ersten Sendungspufferbereich zumindest teilweise verbindbar ist und ausgelegt ist Sendungen von dem ersten Sendungspufferbereich entgegen zu nehmen. Des Weiteren umfasst das System eine erste Signalvorrichtung in dem ersten Sendungspufferbereich und eine zweite Signalvorrichtung in dem zweiten Sendungspufferbereich. Dabei ist das erste Fassungsvermögen des zweiten Sendungspufferbereichs in Abhängigkeit eines ersten Auslösesignals von der ersten Signalvorrichtung vergrößerbar. Zudem ist diese Vergrößerung des Fassungsvermögens unterbrechbar, entweder in Abhängigkeit eines zweiten Auslösesignals von der ersten Signalvorrichtung in dem ersten Sendungspufferbereich oder in Abhängigkeit von einem dritten Auslösesignal von der zweiten Signalvorrichtung in dem zweiten Sendungspufferbereich. Das System weist, soweit übertragbar, die gleichen Vorteile auf, welche bezüglich des vorgestellten Verfahrens aufgeführt sind.

Zudem ist in einer weiteren Ausführungsform der Erfindung vorgesehen, dass der erste Sendungspufferbereich zumindest teilweise eine Wendelrutschenvorrichtung umfasst. Durch das Gefälle der Wendelrutschenvorrichtung liegen die Sendungen dicht aneinander, sodass sich, wenn sich erste Sendungen zunächst in dem zweiten Sendungspufferbereich stauen, weitere Sendungen in der Wendelrutschenvorrichtung automatisch unter Ausnutzung des vorhandenen Raums optimal stauen. Durch die Breite der Wendelrutschenvorrichtung und den unterschiedlichen Gewichts- und Gleiteigenschaften der Sendungen kommt es zu keinen ungewünschten seriellen Aufreihungen von Sendungen (sogenannter Perlenketten-Effekt).

Auch ist in einer weiteren Ausführungsform der Erfindung vorgesehen, dass der zweite Sendungspufferbereich zumindest teilweise eine Teleskopfördervorrichtung umfasst. Diese Art von Sendungspufferbereich in Kombination mit der zuvor erwähnten Wendelrutschenvorrichtung ist bereits weit verbreitet, sodass das vorgestellte Verfahren unmittelbar und ohne große Mehrkosten eingesetzt werden kann. Zudem kann die Vergrößerung der ersten Kapazität, sprich einer Teleskopfördervorrichtung im Ausgangszustand, sehr genau und somit bedarfsgerecht vollzogen werden.
Ferner ist in einer weiteren Ausführungsform der Erfindung vorgesehen, dass die erste und zweite Signalvorrichtung zumindest teilweise Lichtschrankenvorrichtungen umfassen. Im Zusammenhang mit dem Befördern von Sendungen weisen Lichtschrankenvorrichtungen den Vorteil auf, dass auch dynamische Vorgänge sehr genau unter Berücksichtigung von jeweiligen Positionen von den Sendungen im System wahrgenommen werden können. Somit kann eine effiziente Signalauslösung mittels der Lichtschrankenvorrichtungen gewährleistet werden. Auch ist die Verwendung von Lichtschrankenvorrichtungen bereits häufig anzutreffen, sodass das vorgestellte Verfahren unmittelbar und ohne große Mehrkosten eingesetzt werden kann.

Auch ist in einer weiteren Ausführungsform der Erfindung vorgesehen, dass das erste und dritte Auslösesignal jeweils durch einen Verdunklungszustand der jeweiligen Lichtschrankenvorrichtung ausgelöst wird und das zweite Auslösesignal durch einen hellen Zustand der Lichtschrankenvorrichtung von der ersten Signalvorrichtung ausgelöst wird. Erfindungsgemäß wird also das Vorziehen der Teleskopfördervorrichtung nicht mehr von einer Lichtschranke zwischen Wendelrutschenvorrichtung und Teleskopfördervorrichtung ausgelöst, sondern beispielsweise von einem Verdunklungszustand bei der ersten Signalvorrichtung mittels zugehöriger Lichtschrankvorrichtung. Eine kostengünstige Erhöhung der Speicherkapazität kann somit noch besser gewährleistet werden. Dabei ist folgende Ablaufsequenz vorstellbar: Die ersten Sendungen stauen sich zunächst auf der Teleskopfördervorrichtung im Bereich eines Auslaufs der Wendelrutschenvorrichtung. Dadurch stauen sich weitere Sendungen in der Wendelrutschenvorrichtung zurück. Durch das Gefälle der Wendelrutschenvorrichtung und die unterschiedlichen Gewichts- und Gleiteigenschaften der Sendungen nutzen die Sendungen auch die gesamte Breite der Wendelrutsche (keine "Perlenkette"). Wenn die Lichtschrankvorrichtung in der Wendelrutschenvorrichtung verdunkelt wird, wird die Teleskopfördervorrichtung so lange angesteuert, bis die Lichtschrankvorrichtung in der Wendelrutschenvorrichtung wieder frei ist oder die vordere Lichtschrankenvorrichtung an der Teleskopfördervorrichtung "Teleskopfördervorrichtung voll" signalisiert. Durch das Vorziehen der Sendungen auf Basis der Lichtschrankvorrichtung in der Wendelrutschenvorrichtung bleiben die Sendungen auf der Teleskopfördervorrichtung kompakt beieinander und nutzen die Breite des Teleskops aus. Es lässt sich somit beispielsweise eine höhere Sendungsdichte auf der Teleskopfördervorrichtung erreichen, sodass somit eine kostengünstige Erhöhung der Speicherkapazität noch besser gewährleistet werden kann.

Zudem ist in einer weiteren Ausführungsform der Erfindung vorgesehen, dass die erste Signalvorrichtung in einer mittleren Position in dem ersten Sendungspufferbereich vorgesehen ist, sodass das erste Auslösesignal ausgelöst wird, wenn mindestens eine Sendung an dieser mittleren Position stehen bleibt. Die zuvor genannten Vorteile lassen sich somit noch besser erreichen. Insbesondere kann somit auch eine optimale Nutzung einer Speicherkapazität der Wendelrutschenvorrichtung gemäß der zuvor ausgeführten Funktionen erreicht werden.

Zudem ist in einer weiteren Ausführungsform der Erfindung vorgesehen, dass die zweite Signalvorrichtung an einer Endposition, gegenüberliegend eines Verbindungsbereichs zwischen erstem und zweitem Sendungspufferbereich liegend, in dem zweiten Sendungspufferbereich vorgesehen ist. Die zuvor genannten Vorteile lassen sich somit noch besser erreichen. Insbesondere kann somit auch eine optimale Nutzung einer Speicherkapazität der Teleskopfördervorrichtung gemäß der zuvor ausgeführten Funktionen erreicht werden.

Zudem ist in einer weiteren Ausführungsform der Erfindung vorgesehen, dass die Übergabe von Sendungen an den ersten Sendungspufferbereich mittels mindestens einer Sortiervorrichtung in dem Übergangsbereich vorgesehen ist. Sendungen können somit auf einfache Weise an den ersten Sendungspufferbereich übergeben werden. Auch ist vorstellbar, dass die Funktionsweise oder zumindest eine Funktionsweise der Sortiervorrichtung mit der Funktionsweise der ersten und zweiten Signalvorrichtung gekoppelt ist, sodass je nach Zuständen in den ersten und zweiten Sendungspufferbereichen ein entsprechender Nachschub an Sendungen übergeben werden kann.

Auch ist in einer weiteren Ausführungsform der Erfindung vorgesehen, dass der erste Sendungspufferbereich zumindest teilweise eine Wendelrutschenvorrichtung umfasst und der zweite Sendungspufferbereich zumindest teilweise eine Teleskopfördervorrichtung umfasst. Diese Ausführungsform des Systems weist, soweit übertragbar, die gleichen Vorteile auf, welche bezüglich des vorgestellten Verfahrens aufgeführt sind.

Auch ist in einer weiteren Ausführungsform der Erfindung vorgesehen, dass die erste und zweite Signalvorrichtung zumindest teilweise Lichtschrankenvorrichtungen umfassen. Diese Ausführungsform des Systems weist, soweit übertragbar, die gleichen Vorteile auf, welche bezüglich des vorgestellten Verfahrens aufgeführt sind.

Schlussendlich ist in einer weiteren Ausführungsform der Erfindung vorgesehen, dass das System ferner wenigstens eine Sortiervorrichtung umfasst, welche mit dem ersten Sendungspufferbereich verbindbar ist, sodass die Übergabe von Sendungen mittels der mindestens einen Sortiervorrichtung in dem Übergangsbereich durchführbar ist. Diese Ausführungsform des Systems weist, soweit übertragbar, die gleichen Vorteile auf, welche bezüglich des vorgestellten Verfahrens aufgeführt sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein System zur Sendungspufferung bei Kommissionierungsvorgängen von Sendungen;
- Figur 2: ein Flussdiagramm von einem Verfahren zur bedarfsgerechten Erhöhung der Speicherkapazität von Systemen zur Sendungspufferung bei Kommissionierungsvorgängen von Sendungen.

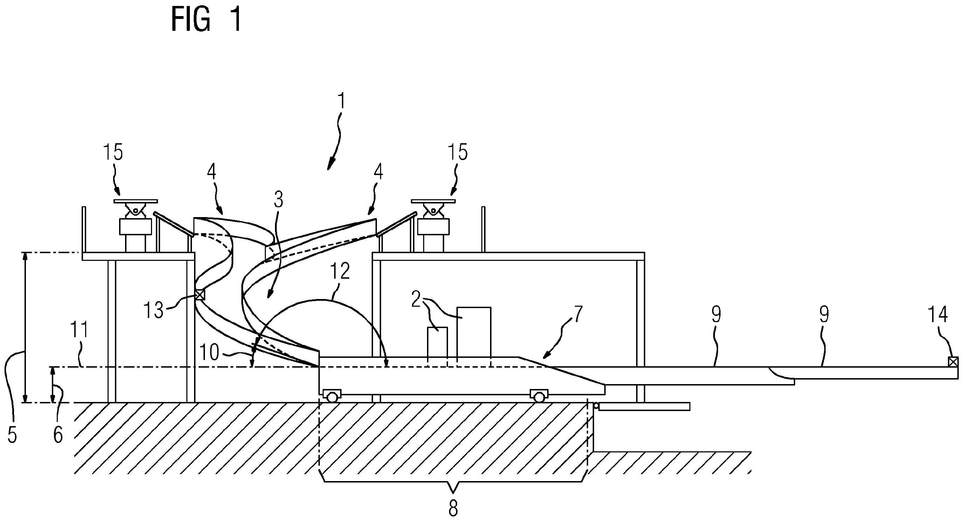

In der Figur 1 ist ein System 1 zur Sendungspufferung bei Kommissionierungsvorgängen von Sendungen 2 gezeigt. Dabei ist links bezogen auf die Bildebene ein erster Sendungspufferbereich 3 in Form einer Wendelrutschenvorrichtung dargestellt. Dieser erste Sendungspufferbereich 3 weist dabei zwei separate Übergangsbereiche 4 auf, in welchem an dieser Stelle nicht näher dargestellte Sendungen 2 an den Sendungspufferbereich 3 in Form der Wendelrutschenvorrichtung übergeben werden können. Die Wendelrutschenvorrichtung ist dabei ähnlich einer Rutsche mit einem Gefälle dargestellt und weist dabei eine Breite auf, welche ausreichend breit ist, sodass mindestens zwei Sendungen mit einer durchschnittlichen Größe nebeneinander Platz finden. Diese Breite kann auf den jeweiligen Anwendungsfall und die damit verbundene durchschnittliche Größe der Sendungen 2 im Vorfeld angepasst werden. Die Wendelrutschenvorrichtung weist darüberhinaus einen im Wesentlichen spiralförmigen beziehungsweise wendelförmigen Verlauf auf, sodass die Sendungen 2 dem Gefälle nach von einer ersten Höhe 5 auf eine niedrigere zweite Höhe 6 transportiert beziehungsweise befördert werden. Dem Schwerkraftprinzip nach und je nach Beschaffung der Oberfläche von der Rutschbahn dieser Wendelrutschenvorrichtung verläuft dieser Vorgang ohne nennenswerte weitere mechanische Vorrichtungen ab. Anschließend an den ersten Sendungspufferbereich 3 schließt sich auf zweiter Höhe 6 ein zweiter Sendungspufferbereich 7 an, wobei dieser zweite Sendungspufferbereich 7 in Form einer Teleskopfördervorrichtung dargestellt ist. Dieser zweite Sendungspufferbereich 7 weist demnach ein erstes Fassungsvermögen 8 auf, welches einen begrenzten Platz für darauf liegende Sendungen 2 bietet, wenn der zweite Sendungspufferbereich 7 noch nicht vergrößert ist. Dabei soll der Begriff "Fassungsvermögen 8" gleichbedeutend mit einem räumlichen Bereich innerhalb des zweiten Sendungspufferbereichs 7 verstanden werden. Dieses erste Fassungsvermögen 8 kann beispielsweise als eine Basisform des zweiten Sendungspufferbereichs 7 bezüglich eines Platzangebots für ankommende Sendungen 2 angesehen werden. Im Sinne der Funktionsweise einer Teleskopfördervorrichtung kann dieses erste Fassungsvermögen 8 vergrößert werden, in dem nach rechts bezogen auf die Bildebene Ausfahrelemente 9 ausgefahren werden können. Diese Ausfahrelemente 9 vergrößern somit den Platz für darauf liegende Sendungen 2 des zweiten Sendungspufferbereichs 7. Mit anderen Worten wird das erste Fassungsvermögen 8 für die Aufnahme und Beförderung von Sendungen 2 auf diese Weise vergrößert. Dabei sind die Ausfahrelemente 9 derart beschaffen, dass sie bei einer Rückstellung in den Zustand eines ersten Fassungsvermögens 8 ähnlich der Funktionsweise eines Teleskops ineinander verschiebbar sind. In dieser Seitenansicht ist dabei eine Breite des zweiten Sendungspufferbereichs 7 nicht zu erkennen. Diese Breite ist dabei ausreichend breit, sodass mindestens zwei Sendungen mit einer durchschnittlichen Größe nebeneinander Platz finden. Diese Breite kann auf den jeweiligen Anwendungsfall und die damit verbundene durchschnittliche Größe der Sendungen 2 im Vorfeld angepasst werden. Der zweite Sendungspufferbereich 7 ist dabei, im Gegensatz zum ersten Sendungspufferbereich 3, im Wesentlichen in einer horizontalen Ausrichtung dargestellt. Der erste Sendungspufferbereich 3 weist im unteren Bereich kurz vor dem Übergang zum zweiten Sendungspufferbereich 7 ein Gefälle mit einem bestimmten Neigungswinkel 10 bezogen auf eine horizontale Bildebene 11 auf. Dieser Neigungswinkel 10 ist je nach Ausgestaltung des ersten Sendungspufferbereichs 3 variierbar. Es sind also je nach Anwendungsfall verschiedene Neigungswinkel 10 vorstellbar, solange somit eine ordnungsmäße Beförderung der Sendungen 2 gewährleistet ist. Je nach Ausprägung des Neigungswinkels 10 stellt sich zudem ein Winkel 12 zwischen dem ersten Sendungspufferbereich 3 und dem zweiten Sendungspufferbereich 7 ein. Das Verhältnis zwischen Neigungswinkel 10 und Winkel 12 kann beispielsweise zwischen 1/3 und 1/17 liegen. Vorstellbar ist jedoch auch, dass der Neigungswinkel 10 einen Wert von 45° aufweist und der Winkel 12 entsprechend einen Wert von 135° aufweist. Auch ist vorstellbar, dass der Neigungswinkel 10 über 45° liegt. Es ist vorstellbar, dass der Neigungswinkel 10 je nach Anwendungsfall und Beschaffenheit der zu befördernden Sendungen 2 auf einen entsprechenden Wert variabel einstellbar oder vorher auf einen Wert festgelegt wird. Je nachdem wie der Neigungswinkel 10 und der Winkel 12 zueinander gewählt sind, lässt sich ein Rückstaueffekt von Sendungen 2, die von dem ersten Sendungspufferbereich 3 auf den zweiten Sendungspufferbereich 7 übergehen, einstellen. Beispielsweise werden ankommende Sendungen 2, welche aufgrund einer steilen Neigung des ersten Sendungspufferbereichs 3 mit einer höheren Geschwindigkeit in den zweiten Sendungspufferbereich 7 befördert werden, weiter in den Bereich des ersten Fassungsvermögens 8 befördert, sodass sich nachkommende Sendungen 2 erst später hier anfangen zu stauen. Nachdem sich jedoch erste ankommende Sendungen 2 anfangen zu stauen, setzt sich der Rückstau in dem ersten Sendungspufferbereich 3 fort, sodass auch die Speicherkapazität von diesem Sendungspufferbereich 3 zumindest teilweise genutzt werden kann. Auf halber Höhe des ersten Sendungspufferbereichs 3 ist zudem eine erste Signalvorrichtung 13 dargestellt. Diese erste Signalvorrichtung 13 kann dabei verschiedenste Ausführungsformen aufweisen, solange sie einen Rückstau von in dem ersten Sendungspufferbereich 3 befindliche Sendungen 2 an dieser Stelle registrieren und entsprechend ein Auslösesignal bereitstellen kann. Beispielsweise kann diese Signalvorrichtung 13 eine Lichtschrankenvorrichtung sein. Wenn sich ein Rückstau in dem Sendungspufferbereich 3 einstellt, wird diese Lichtschrankenvorrichtung beziehungsweise die zugehörige Lichtschranke verdunkelt und löst ein erstes Auslösesignal aus. Dies kann beispielsweise zu Folge haben, dass das erste Fassungsvermögen 8 des zweiten Sendungspufferbereichs 7 vergrößert wird. Dies hat wiederum das Nachrutschen der Sendungen 2 zur Folge, sodass die Lichtschranke wieder frei gegeben wird. Dies hat wiederum zur Folge, dass die Vergrößerung gestoppt wird und zunächst weitere Sendungen 2 wiederum gestaut werden. Eine kompakte Zusammenstallung von Sendungen 2 in dem System 1 wird somit kostengünstig erreicht, sodass eine Erhöhung der Speicherkapazität auf einfache und kostengünstige Weise erreichbar ist. Der zweite Sendungspufferbereich 7 kann beispielsweise zudem weitere Mittel zur Beförderung der Sendungen 2 umfassen. Solch ein Mittel kann beispielsweise mindestens ein in diesem Ausführungsbeispiel nicht näher gezeigtes Transportband umfassen. Auch ist vorstellbar, dass sich die Ausrichtung des zweiten Sendungspufferbereichs 7 bezogen auf die horizontale Bildebene 11 variabel verändern lässt. Beispielsweise kann das rechte Ende bezogen auf die Bildebene etwas tiefer liegen, als ein linkes Ende, welches sich unmittelbar an den ersten Sendungspufferbereich 3 anschließt. An dem rechten Ende des zweiten Sendungspufferbereichs 7 ist zudem eine zweite Signalvorrichtung 14 dargestellt. Diese zweite Signalvorrichtung 14 kann dabei verschiedenste Ausführungsformen aufweisen, solange sie in diesem Bereich befindliche Sendungen 2 registrieren und entsprechend ein Auslösesignal bereitstellen kann. Beispielsweise kann diese Signalvorrichtung 14 eine Lichtschrankenvorrichtung sein. Wenn Sendungen 2 hier ankommen, wird diese Lichtschrankenvorrichtung beziehungsweise die zugehörige Lichtschranke verdunkelt und löst ein drittes Auslösesignal aus. Dies kann beispielsweise zur Folge haben, dass eine Vergrößerung des ersten Fassungsvermögens 8 des zweiten Sendungspufferbereichs 7 gestoppt wird und zunächst weitere Sendungen 2 am linken Ende des zweiten Sendungspufferbereichs 7 und damit auch in dem ersten Sendungspufferbereich 3 gestaut werden. Eine Entnahme von Sendungen 2 in diesem Bereich der zweiten Signalvorrichtung 14 hebt die Bedingung für einen Stopp auf und das zuvor erwähnte Procedere kann erneut ausgelöst werden. Die zwei Sendungspufferbereiche 3, 7 und deren jeweiliger Zustand bedingen sich also derart, sodass eine optimale Ausnutzung der Speicherkapazität des Systems gewährleistet wird. Eine kompakte Zusammenstellung von Sendungen 2 in dem System 1 wird somit kostengünstig erreicht, sodass eine Erhöhung der Speicherkapazität auf einfache und kostengünstige Weise erreichbar ist. In diesem gezeigten Ausführungsbeispiel werden zudem zwei Sortiervorrichtungen 15 dargestellt. Diese sind auf der ersten Höhe 5 links und rechts von dem ersten Sendungspufferbereich 3 in Form der Wendelrutschenvorrichtung positioniert. Von hier aus können Sendungen 2 an den Sendungspufferbereich 3 übergeben werden.

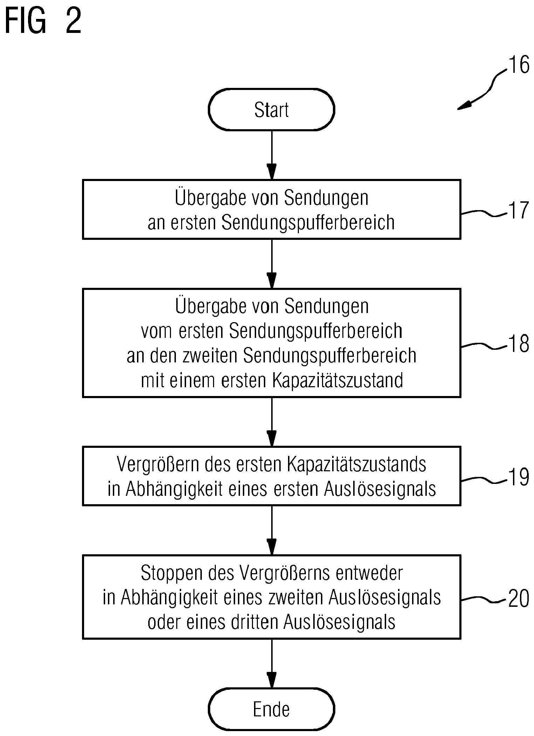

In der Figur 2 ist ein Flussdiagramm 16 von einem Verfahren zur bedarfsgerechten Erhöhung der Speicherkapazität von Systemen 1 zur Sendungspufferung bei Kommissionierungsvorgängen von Sendungen 2 gezeigt. In einem ersten Schritt 17 findet eine Übergabe von Sendungen 2 in einem Übergangsbereich 4 an einen ersten Sendungspufferbereich 3 statt. Anschließend werden die Sendungen 2 in einem zweiten Schritt 18 von dem ersten Sendungspufferbereich 3 an einen zweiten Sendungspufferbereich 7 mit einem ersten Fassungsvermögen 8 übergeben. In einem dritten Schritt 19 wird das erste Fassungsvermögen 8 des zweiten Sendungspufferbereichs 7 in Abhängigkeit eines ersten Auslösesignals von einer ersten Signalvorrichtung 13 in dem ersten Sendungspufferbereich 3 vergrößert. In einem vierten Schritt 20 wird das Vergrößern des ersten Fassungsvermögens 8 des zweiten Sendungspufferbereichs 7 entweder in Abhängigkeit eines zweiten Auslösesignals von der ersten Signalvorrichtung 13 in dem ersten Sendungspufferbereich 3 gestoppt oder in Abhängigkeit von einem dritten Auslösesignal von einer zweiten Signalvorrichtung 14 in dem zweiten Sendungspufferbereich 7 gestoppt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: System
- 2: Sendung
- 3: erster Sendungspufferbereich
- 4: Übergangsbereich
- 5: erste Höhe
- 6: zweite Höhe
- 7: zweiter Sendungspufferbereich
- 8: erstes Fassungsvermögen
- 9: Ausfahrelement
- 10: Neigungswinkel
- 11: horizontale Bildebene
- 12: Winkel
- 13: erste Signalvorrichtung
- 14: zweite Signalvorrichtung
- 15: Sortiervorrichtung
- 16: Flussdiagramm
- 17: erster Schritt
- 18: zweiter Schritt
- 19: dritter Schritt
- 20: vierter Schritt

## Patentansprüche

1. Verfahren zur bedarfsgerechten Erhöhung der Speicherkapazität von Systemen (1) zur Sendungspufferung bei Kommissionierungsvorgängen von Sendungen (2) umfassend die folgenden Schritte:
• Übergabe von Sendungen (2) in einem Übergangsbereich (4) an einen ersten Sendungspufferbereich (3);
• Übergabe der Sendungen (2) von dem ersten Sendungspufferbereich (3) an einen zweiten Sendungspufferbereich (7) mit einem ersten Fassungsvermögen (8);
• Vergrößern des ersten Fassungsvermögens (8) des zweiten Sendungspufferbereichs (7) in Abhängigkeit eines ersten Auslösesignals von einer ersten Signalvorrichtung (13) in dem ersten Sendungspufferbereich (3);
• Stoppen des Vergrößerns des ersten Fassungsvermögens(8) des zweiten Sendungspufferbereichs (7) entweder in Abhängigkeit eines zweiten Auslösesignals von der ersten Signalvorrichtung (13) in dem ersten Sendungspufferbereich (3) oder in Abhängigkeit von einem dritten Auslösesignal von einer zweiten Signalvorrichtung (14) in dem zweiten Sendungspufferbereich (7).

2. Verfahren nach Anspruch 1, wobei der erste Sendungspufferbereich (3) zumindest teilweise eine Wendelrutschenvorrichtung umfasst.

3. Verfahren nach einem der vorherigen Ansprüche, wobei der zweite Sendungspufferbereich (7) zumindest teilweise eine Teleskopfördervorrichtung umfasst.

4. Verfahren nach einem der vorherigen Ansprüche, wobei die erste und zweite Signalvorrichtung (13, 14) zumindest teilweise Lichtschrankenvorrichtungen umfassen.

5. Verfahren nach Anspruch 4, wobei das erste und dritte Auslösesignal jeweils durch einen Verdunklungszustand der jeweiligen Lichtschrankenvorrichtung ausgelöst werden und das zweite Auslösesignal durch einen hellen Zustand der Lichtschrankenvorrichtung von der ersten Signalvorrichtung (13) ausgelöst wird.

6. Verfahren nach einem der vorherigen Ansprüche, wobei die erste Signalvorrichtung (13) in einer mittleren Position in dem ersten Sendungspufferbereich (3) vorgesehen ist, sodass das erste Auslösesignals ausgelöst wird, wenn mindestens eine Sendung (2) an dieser mittleren Position stehen bleibt.

7. Verfahren nach einem der vorherigen Ansprüche, wobei die zweite Signalvorrichtung (14) an einer Endposition, gegenüberliegend eines Verbindungsbereichs zwischen erstem und zweitem Sendungspufferbereich (7) liegend, in dem zweiten Sendungspufferbereich (7) vorgesehen ist.

8. Verfahren nach einem der vorherigen Ansprüche, wobei die Übergabe von Sendungen (2) an den ersten Sendungspufferbereich (3) mittels mindestens einer Sortiervorrichtung (15) in dem Übergangsbereich (4) vorgesehen ist.

9. System (1) zur Sendungspufferung bei Kommissionierungsvorgängen von Sendungen (2) umfassend
• einen ersten Sendungspufferbereich (3), ausgelegt Sendungen (2) in einem Übergangsbereich (4) entgegen zu nehmen;
• einen zweiten Sendungspufferbereich (7) mit einem ersten Fassungsvermögen (8), welcher mit dem ersten Sendungspufferbereich (3) zumindest teilweise verbindbar ist und ausgelegt ist Sendungen (2) von dem ersten Sendungspufferbereich (3) entgegen zu nehmen;
• eine erste Signalvorrichtung (13) in dem ersten Sendungspufferbereich (3);
• eine zweite Signalvorrichtung (14) in dem zweiten Sendungspufferbereich (7);
• wobei das erste Fassungsvermögen (8) des zweiten Sendungspufferbereichs (7) in Abhängigkeit eines ersten Auslösesignals von der ersten Signalvorrichtung (13) vergrößerbar ist und
• diese Vergrößerung des ersten Fassungsvermögens(8) unterbrechbar ist, entweder in Abhängigkeit eines zweiten Auslösesignals von der ersten Signalvorrichtung (13) in dem ersten Sendungspufferbereich (3) oder in Abhängigkeit von einem dritten Auslösesignal von der zweiten Signalvorrichtung (14) in dem zweiten Sendungspufferbereich (7).

10. System (1) nach Anspruch 9, wobei der erste Sendungspufferbereich (3) zumindest teilweise eine Wendelrutschenvorrichtung umfasst und der zweite Sendungspufferbereich (7) zumindest teilweise eine Teleskopfördervorrichtung umfasst.

11. System nach einem der Ansprüche 9 bis 10, wobei die erste und zweite Signalvorrichtung (13, 14) zumindest teilweise Lichtschrankenvorrichtungen umfassen.

12. System (1) nach einem der Ansprüche 9 bis 11, wobei das System (1) ferner wenigstens eine Sortiervorrichtung (15) umfasst, welche mit dem ersten Sendungspufferbereich (3) verbindbar ist, sodass die Übergabe von Sendungen (2) mittels der mindestens einen Sortiervorrichtung (15) in dem Übergangsbereich (4) durchführbar ist.
